# EUROPEAN PATENT APPLICATION

(11) **EP 2 899 164 A1**
(43) Date of publication of application: **29.07.2015**
(21) Application number: 14152915.6
(22) Date of filing: 28.01.2014
(51) Int. Cl.: C02F 1/42, A47J 31/60, C02F 1/28, C02F 1/00, B01J 47/02

(54) **Device and method for conditioning an aqueous liquid such as drinking water**

(71) Applicant: Brita GmbH, 65232 Taunusstein (DE)
(72) Inventor: Felber, Stefanie, D-61250 Usingen (DE); Dobbelfeld, Andrea, D-65326 Aarbergen (DE)
(74) Representative: Meissner, Bolte & Partner GbR

(57) **Abstract**

A device and method for conditioning an aqueous liquid, e.g. drinking water, includes at least one outlet for the conditioned liquid; at least one inlet (1) for receiving a flow of liquid to be treated; and at least first, second and third liquid treatment sections (3,4,5), arranged in parallel in flow sense, each containing a liquid treatment medium including at least one ion exchange material. The device is arranged to create at least three sub-flows of liquid from a first flow of liquid to be treated by distributing the first flow over the first, second and third liquid treatment sections (3,4,5). The device is arranged to obtain at least a bypass flow of liquid, to conduct the bypass flow through the device so as to bypass each of the first, second and third liquid treatment sections (3,4,5) and to unite the bypass flow with the at least three sub-flows upstream of the at least one outlet. Use of the described device to condition drinking water, including using the conditioned drinking water to produce a beverage by extraction, for example coffee.

## Description

The invention relates to a device for conditioning an aqueous liquid, e.g. drinking water, including:
at least one outlet for the conditioned liquid;
at least one inlet for receiving a flow of liquid to be treated; and
at least first, second and third liquid treatment sections, arranged in parallel in flow sense, each containing a liquid treatment medium including at least one ion exchange material,
wherein the device is arranged to create at least three sub-flows of liquid from a first flow of liquid to be treated by distributing the first flow over the first, second and third liquid treatment sections.

The invention also relates to a kit of parts for forming an apparatus for conditioning an aqueous liquid, e.g. drinking water, including:
a cartridge head for connection to at least one supply of liquid to be treated; and
a replaceable liquid treatment cartridge.

The invention also relates to an apparatus for producing a beverage by extraction, for example coffee, including an apparatus for conditioning an aqueous liquid, e.g. drinking water.

The invention also relates to a method of conditioning an aqueous liquid, e.g. drinking water, including:
creating at least three sub-flows of liquid from a flow of liquid to be treated by distributing the flow of liquid over at least first, second and third liquid treatment sections,
wherein the first, second and third liquid treatment sections are arranged in parallel in flow sense, and
wherein the first, second and third liquid treatment sections each include at least one ion exchange material.

The invention also relates to a use of a device of the above-mentioned type.

WO 2012/146567 A1 discloses a system for conditioning a liquid such as water, including a first holder of a medium for treating liquid, the medium in the first holder including an ion exchange material loaded with at least a first counter ion species, and a second holder of a medium for treating liquid, the medium in the second holder including an ion exchange material loaded with at least a second counter ion species of the same polarity as the first, wherein the media in the first and second holders are configured to exchange at least one of the first and second counter ion species for ions in the liquid to a different extent. The system is arranged to lead a first fraction of the liquid to be treated through only the first of the first and second holders and a second fraction of the liquid to be treated through at least the second of the first and second holders. In an embodiment, the first and second counter ion species are cation species, in particular cation species other than hydrogen, more particularly cation species from a group comprising sodium, potassium and magnesium. In an embodiment, at least one of the medium in the first holder and the medium in the second holder includes an amount of cation exchange material in the hydrogen form. In an embodiment, the system is arranged to lead at least a third fraction of the liquid to be treated through neither of the first and second holders. It is disclosed that one can add a third counter ion species in a certain ratio to the other counter ion species by passing some or all of the third fraction through a third holder including an ion exchange material loaded with at least a third counter ion species. One can also choose to retain a certain counter ion species (calcium for instance) that would otherwise always be removed, using a bypass conduit containing no ion exchange material (or an ion exchange material for ion species of opposite polarity). The third fraction can still be subjected to other types of treatment such as mechanical filtering, adsorption (e.g. by means of an activated carbon filter), etc.

A typical application of the known device is conditioning drinking water from the water mains for subsequent use in preparing a hot beverage by extraction, in particular coffee. Trade associations have defined recommended specifications for water to be used in brewing coffee. For example, the German Coffee Association (Deutscher Kaffeeverband) has issued the following recommendations (in terms of mineral composition):

| | |
|---|---|
| Total mineral contents: | 100 - 200 mg·l⁻¹; |
| Total hardness: | 4 - 8 °dH; |
| Carbonate hardness: | 3 - 6 °dH; |
| Iron: | < 0.5 mg·l⁻¹; and |
| Copper: | < 0.5 mg·l⁻¹. |

The first three conditions can be relatively difficult to satisfy simultaneously across the range of mains water compositions typically encountered in the field. Three treatment sections including cation exchange material, especially if in the hydrogen form, may lead to conditioned water with too low a mineral content. On the other hand, a cartridge with two treatment sections and a bypass with variable flow resistance may not allow one to achieve both a value for the carbonate hardness within the recommended range and a value for the total hardness within the recommended range if half of the water not led through the bypass has the carbonate hardness removed and the other half has the total hardness removed. Providing mixed beds of liquid treatment medium including cation exchange resin in the hydrogen form and cation exchange resin loaded with an alkali metal will not yield consistent results, because the mixed beds will produce different results as one resin in one form is exhausted before the other.

It is an object of the invention to provide a device, kit of parts, apparatus, method and use of the types defined above in the opening paragraphs that allow one to obtain conditioned liquid suitable for meeting typical recommended specifications for drinking water to be used in brewing coffee in a relatively efficient manner.

This object is achieved according to a first aspect by the device according to the invention, which is characterised in that the device is arranged to obtain at least a bypass flow of liquid, to conduct the bypass flow through the device so as to bypass each of the first, second and third liquid treatment sections and to unite the bypass flow with the at least three sub-flows upstream of the at least one outlet.

The device includes at least first, second and third liquid treatment sections, arranged in parallel in flow sense, each containing a liquid treatment medium including at least one ion exchange material, and the device is arranged to create at least three sub-flows of liquid from a first flow of liquid to be treated by distributing the first flow over the first, second and third liquid treatment sections. The requirements can be met by choosing the appropriate type of ion exchange material for each of the first, second and third liquid treatment sections. Because they are separated from each other, being arranged in parallel in flow sense, consistent treatment can be achieved in that each medium is gradually exhausted. To avoid unnecessary treatment by ion exchange and to ensure that the lower bound of the recommended mineral contents range is achieved, the device is arranged to obtain at least a bypass flow of liquid, to conduct the bypass flow through the device so as to bypass each of the first, second and third liquid treatment sections and to unite the bypass flow with the at least three sub-flows upstream of the at least one outlet. The conditioned liquid is thus obtained by mixing differently treated sub-flows. Because flows of liquid are treated, the device is a throughflow device, configured to treat liquid flowing through the liquid treatment media whilst retaining the liquid treatment medium in the respective liquid treatment sections, e.g. by means of a mechanical filter. As a consequence, pumps need not be arranged in the device.

In an embodiment, at least one of the first, second and third liquid treatment sections includes a liquid treatment medium for essentially demineralising water brought into contact with the liquid treatment medium.

The embodiment has the general effect of allowing one to keep the total mineral content of the conditioned liquid below a recommended maximum value and the carbonate and permanent hardness above a recommended minimum value. This embodiment is also useful when both total hardness and carbonate hardness need to be reduced. This is difficult to achieve with only a parallel arrangement of a liquid treatment section with cation exchange material in the hydrogen form and a liquid treatment section with cation exchange material loaded with an alkali metal such as potassium or sodium. The latter only exchanges the cations of hydrogen carbonate salts, whereas the former removes hydrogen carbonate ions but does not necessarily release hydrogen in exchange for magnesium or calcium. It thus reduces the acid neutralising capacity (pH = 4.3), that is the quantitative capacity of an aqueous solution to neutralise an acid. When the sub-flows led through the two parallel liquid treatment sections are then united, the carbonate hardness increases again. Where one of the liquid treatment sections includes a liquid treatment medium for essentially demineralising water brought into contact with the liquid treatment medium, the treated liquid can be mixed with a sub-flow of liquid treated by cation exchange material in the hydrogen form without increasing the carbonate hardness compared to that of that sub-flow before mixing. This aspect of the device also has independent significance, providing substantially the same effects also where the device is not arranged to obtain at least a bypass flow of liquid, to conduct the bypass flow through the device so as to bypass each of the first, second and third liquid treatment sections and to unite the bypass flow with the at least three sub-flows upstream of the at least one outlet.

In an embodiment, the liquid treatment medium of at least one of the first, second and third liquid treatment sections includes a cation exchange material loaded with potassium.

It has been found that aqueous liquids enriched with potassium affect the taste of beverages made by extraction using the conditioned liquid, in particular of coffee. At relatively high potassium concentrations, the extraction process results in a higher concentration of those soluble components that lend coffee a less bitter but more intensive roasted aroma. At lower concentrations, the opposite effect occurs. Preferences for a particular strength of taste differ between countries. Thus, this embodiment allows one to provide drinking water suitable for brewing coffee matching the preferences of consumers in a particular locality. This embodiment is thus based on the realisation that ensuring the lower bound of the recommended range for the total mineral contents is met may be achieved in a way that also allows one to affect the taste of coffee brewed using the conditioned liquid. At the same time, the maximum recommended values for the total and carbonate hardness are not exceeded, which protects the appliance used to brew the coffee.

In a variant, a majority of the cation exchange material included in the liquid treatment medium of at least one of the first, second and third liquid treatment sections including cation exchange material loaded with potassium is in the potassium form.

This ensures that potassium is released relatively consistently over the lifetime of the device. If one were to mix cation exchange materials loaded with different counter-ions, the release of counter-ions would be in accordance with the selectivity series of the cation exchange material. One species of counter-ions would be released first and the other only after the material loaded with the first species had been essentially exhausted. In this embodiment, even if there is a mix of cation exchange materials loaded with different counter-ion species before use of the device, the majority, measured by volume, e.g. by dry volume, is in the potassium form.

In an embodiment, the liquid treatment medium of at least one of the first, second and third liquid treatment sections includes a cation exchange material loaded with hydrogen.

This liquid treatment section is suitable for reducing carbonate hardness. The hydrogen reacts with hydrogen carbonate to form CO₂, which gases out. In the process, the concentration of dissolved magnesium and calcium carbonate is reduced. In addition, heavy metals can be removed. These are taken up in exchange for the hydrogen ions that are released by the liquid treatment medium.

In a variant, a majority of the cation exchange material included in the liquid treatment medium of at least one of the first, second and third liquid treatment sections including cation exchange material loaded with hydrogen is in the hydrogen form.

Again, this furthers the relatively effective and consistent treatment of liquid in the liquid treatment section concerned over the lifetime of the device. It is not ruled out that there may be a mix of cation exchange materials loaded with different counter-ion species before use of the device, but the majority, measured by volume, e.g. by dry volume, is in the hydrogen form.

In an embodiment, the liquid treatment medium of at least one of the first, second and third liquid treatment sections includes weakly acidic cation exchange resin.

Thus, in this embodiment, the cation exchange material is a resin. Compared to strongly acidic cation exchange resins, weakly acidic cation exchange resins have a higher volumetric capacity (as defined e.g. in German standard DIN 54403). This allows the device to be more compact. It is of especial use where the device is a replaceable liquid treatment cartridge for connection to a cartridge head.

In an embodiment, the device includes a housing,
the housing being provided with at least one outlet port and at least one inlet port,
wherein each of the outlets corresponds to a respective one of the outlet ports and each of the inlets corresponds to a respective one of the inlet ports, and
wherein the first, second and third liquid treatment sections are arranged within the housing.

The housing can be relatively compact, because the parallel liquid treatment sections allow one to use few, if any, valves and pumps. Instead, the effect of the device is determined by the media in the various treatment sections. Because they are separate, being arranged in parallel in flow sense, the effect remains relatively constant over the lifetime of the device. Furthermore, the housing may have relatively few inlet ports and outlet ports. The first flow is divided into sub-flows within the housing.

In a variant of this embodiment, the device is a replaceable liquid treatment cartridge for connection to a cartridge head by means of a mechanical interface, and the mechanical interface is arranged to establish essentially liquid-tight connections between the at least one inlet port and respective outlet ports of the cartridge head and between the at least one outlet port and respective inlet ports of the cartridge head upon connection of the replaceable liquid treatment cartridge to the cartridge head.

The liquid treatment media in the first, second and third liquid treatment sections can have a limited treatment capacity and be regenerated off-site (i.e. at a different location from the one at which the liquid is conditioned). Furthermore, the apparatus can be adapted to local circumstances by using an appropriate one of several different compatible cartridges. Because the first, second and third liquid treatment sections are arranged within the same cartridge, the device can be used with a cartridge head for connection to a single replaceable cartridge or one for connecting multiple replaceable cartridges in series. There are many such cartridge heads already in use in coffee bars and restaurants.

In an embodiment, wherein the device includes a housing, the housing being provided with at least one outlet port and at least one inlet port, each of the outlets corresponds to a respective one of the outlet ports and each of the inlets corresponds to a respective one of the inlet ports, and the first, second and third liquid treatment sections are arranged within the housing, a device for distributing a flow of liquid received through at least one, e.g. only one, of the at least one inlet ports over the first, second and third liquid treatment sections is arranged within the housing.

This has the effect of reducing the number of inlet ports that the device has to be provided with. In particular where the device is a replaceable liquid treatment cartridge as defined above, the number of compatible outlet ports of the cartridge head can remain low. Fewer sealing elements are required and the risk of leaks is lower. Moreover, compatibility with cartridge heads already widely in use is easier to ensure. These generally have one or two outlet ports for connection to inlet ports provided on compatible replaceable liquid treatment cartridges.

In a variant of this embodiment, the first, second and third liquid treatment sections are each liquid-permeable at a respective inlet end, and the device for distributing a flow of liquid includes a chamber section from which each of the inlet ends is accessible, for example through at least one liquid-permeable device positioned between the liquid treatment sections and the chamber section, e.g. at least one liquid-permeable device separating the chamber section from each of the inlet ends.

This is a relatively compact arrangement for creating the three sub-flows. It is not necessary to provide separate flow dividers and different conduits associated with the different liquid treatment sections. The volumetric flow ratio between the three sub-flows is determined by the cross-sectional areas of the liquid-permeable parts of the respective liquid treatment sections, the lengths of the paths from the inlet ends to a mixing location where the sub-flows are united and the characteristics of the liquid treatment media in the different liquid treatment sections. Different versions of the same basic design can be made relatively easily by varying the cross-sectional areas. The inlet ends may be accessible through at least one liquid-permeable device positioned between the liquid treatment sections and the chamber section. This prevents mixing of different liquid treatment media. In a compact arrangement with relatively few parts, at least one liquid-permeable device may separate the chamber section from each of the inlet ends. Such a device could be a screen, mesh or at least one sheet of non-woven material, e.g. one supported by a frame.

In an embodiment, wherein the device includes a housing, the housing being provided with at least one outlet port and at least one inlet port, each of the outlets corresponds to a respective one of the outlet ports and each of the inlets corresponds to a respective one of the inlet ports, and the first, second and third liquid treatment sections are arranged within the housing, a mixing location is provided within the housing for uniting the bypass flow with the at least three sub-flows.

Thus, the housing need be provided with relatively few outlet ports. This is of particular use where the device is embodied as a replaceable liquid treatment cartridge of the type defined above. Compatibility with existing cartridge head configurations can be ensured, since these usually have only one inlet port for connection to an outlet port of the replaceable liquid treatment cartridge. Even where a new cartridge head design is adopted, relatively few seals are required at the interface between the cartridge head and the cartridge, and the risk of leaks is reduced.

In an embodiment, wherein the device includes a housing, the housing being provided with at least one outlet port and at least one inlet port, each of the outlets corresponds to a respective one of the outlet ports and each of the inlets corresponds to a respective one of the inlet ports, and the first, second and third liquid treatment sections are arranged within the housing, the housing includes a chamber extending in an axial direction with respect to a principal axis of the chamber, wherein the first, second and third liquid treatment sections are delimited by at least one wall partitioning at least an axial section of the chamber into sections arranged in parallel in flow sense.

This makes the device relatively compact and saves on material for walls. This is especially of use where the device is embodied as a replaceable liquid treatment cartridge of the type defined above and/or where the liquid passes through the device at relatively high pressure. It allows one to adapt existing liquid treatment cartridges without having to change the housing design. Instead of having one chamber or section of a chamber filled with a liquid treatment medium (which may be a mixture) of essentially uniform composition, the chamber is partitioned by adding the at least one partitioning wall. This can be done both in liquid treatment cartridges which have their at least one inlet at one end of a longitudinal principal axis and their at least one outlet at the opposite end and in liquid treatment cartridges that have both the inlets and the outlets at the same end and contain a fall tube or riser tube. It is moreover possible to distribute untreated liquid evenly at one end of the chamber so as to impinge on liquid-permeable parts at inlet ends of the sections in a relatively uniform manner. The cross-sectional areas of the respective liquid-permeable parts can then be adjusted in the design phase to achieve a particular volumetric flow ratio between the sub-flows that are created at this end of the chamber.

In a variant, the partitioning walls delimiting at least one of the first, second and third liquid treatment sections are part of at least one insert.

This makes it relatively easy to produce different variants of the same device in which the first, second and third liquid treatment sections have different sizes and/or a fourth liquid treatment section is present. Thus, more of the liquid can be subjected to one type of treatment in one variant and less in another. The majority of the housing design remains the same. It suffices to select the appropriate insert or inserts.

In an embodiment, in which the device includes a housing, the housing being provided with at least one outlet port and at least one inlet port, each of the outlets corresponds to a respective one of the outlet ports and each of the inlets corresponds to a respective one of the inlet ports, and the first, second and third liquid treatment sections are arranged within the housing, the housing including a chamber extending in an axial direction with respect to a principal axis of the chamber, wherein the first, second and third liquid treatment sections are delimited by at least one wall partitioning at least an axial section of the chamber into sections arranged in parallel in flow sense, adjacent ones of the first, second and third liquid treatment sections are separated by partitioning walls extending radially within the chamber.

Thus, seen in cross-section, the partitioning walls essentially define sectors. This is of particular use where the chamber is essentially circle-cylindrical. Liquid can be introduced essentially centrally, so that a rotationally invariant pressure distribution varying essentially only radially results. For liquid treatment sections of approximately the same length containing granular media with approximately the same particle size or size distribution, it suffices to vary the sizes of the respective sectors to determine the volumetric flow ratios between the three or more sub-flows.

In an embodiment, in which the device includes a housing, the housing being provided with at least one outlet port and at least one inlet port, each of the outlets corresponds to a respective one of the outlet ports and each of the inlets corresponds to a respective one of the inlet ports, and the first, second and third liquid treatment sections are arranged within the housing, the housing including a chamber extending in an axial direction with respect to a principal axis of the chamber, at least one of the first, second and third liquid treatment sections is contained within an insert having at least a radially outer wall conforming to a section of a side wall of the chamber and two walls extending radially in the direction of the principal axis which are joined at a radially inner end.

Thus, inserting the liquid treatment media into the sections may take place before placement of the insert into the chamber, reducing the risk of spill-over into spaces for forming other liquid treatment sections. The radially extending walls need not be fixed to the chamber wall at their radially outer edge to ensure that sections of defined cross-sectional shape and area are created. However, the radially outer wall may need to be sealed against the chamber wall.

In an embodiment, in which the device includes a housing, the housing being provided with at least one outlet port and at least one inlet port, each of the outlets corresponds to a respective one of the outlet ports and each of the inlets corresponds to a respective one of the inlet ports, and the first, second and third liquid treatment sections are arranged within the housing, the housing including a chamber extending in an axial direction with respect to a principal axis of the chamber, a conduit for conducting liquid in axial direction is arranged within the chamber, and a liquid-permeable device is arranged between an axial end of the conduit and an axial end of the first, second and third liquid treatment sections in flow sense.

The conduit functions as a riser or fall tube, leading liquid past the liquid treatment sections, so that the inlet and outlet ports of the housing can be at the same end of the housing. The liquid-permeable device helps achieve an even pressure distribution. It may define an empty chamber section for collecting liquid, keeping granular liquid treatment media out of this chamber section. This helps achieve a more uniform pressure distribution at the inlet or outlet ends of the liquid treatment sections.

In a variant, the conduit is essentially centred on the principal axis.

This further contributes to achieving a relatively uniform pressure distribution that varies essentially only radially, in particular where the chamber has a rotationally symmetrical shape with respect to the principal axis.

In an embodiment, wherein the device includes a housing, the housing being provided with at least one outlet port and at least one inlet port, each of the outlets corresponds to a respective one of the outlet ports and each of the inlets corresponds to a respective one of the inlet ports, and the first, second and third liquid treatment sections are arranged within the housing, wherein the housing includes a chamber extending in an axial direction with respect to a principal axis of the chamber, wherein a conduit for conducting liquid in axial direction is arranged within the chamber, and wherein a liquid-permeable device is arranged between an axial end of the conduit and an axial end of the first, second and third liquid treatment sections in flow sense, at least one of the conduit and at least a frame of the liquid-permeable device is included in an insert for placement in the housing.

This facilitates assembly of the device.

In a particular variant, the insert, e.g. the conduit, supports at least one of the partitioning walls.

In an embodiment, the device, e.g. the housing, includes a further liquid treatment section through which the bypass sub-flow is arranged to be led,

This makes more efficient use of the available ion exchange material, since only so much of the liquid to be treated is actually treated as is required to meet the recommended minimum and maximum values for the relevant parameters. This embodiment is also useful where it would otherwise be difficult to meet a recommendation for the minimum total mineral content. The bypass sub-flow may not be treated at all or it may be treated by other means than by contacting it with ion exchange material, depending on the embodiment.

In a variant therefore, the treatment in the further liquid treatment section is of a type other than treatment by contacting with an ion exchange material.

Examples include mechanical filtration, electrophysical treatment and treatment by a sorbent, e.g. activated carbon.

According to another aspect of the invention, there is provided a kit of parts for forming an apparatus for conditioning an aqueous liquid, e.g. drinking water, including:
a cartridge head for connection to at least one supply of liquid to be treated; and
a replaceable liquid treatment cartridge comprising at least one inlet port, at least one outlet port and a device according to the invention,
wherein the cartridge head and the liquid treatment cartridge include respective components of a mechanical interface for connecting the replaceable liquid treatment cartridge to the cartridge head so as to establish essentially liquid-tight connections between the at least one inlet port and respective outlet ports of the cartridge head and between the at least one outlet port and respective inlet ports of the cartridge head upon connection of the replaceable liquid treatment cartridge to the cartridge head.

This kit of parts provides essentially the same effects as the device according to the invention. Furthermore, it is relatively easy to use the same basic design of the cartridge in different variants adapted to untreated liquid having compositions within different respective ranges. It suffices to select the appropriate media and/or sizes of the liquid treatment sections.

In an embodiment, the liquid treatment cartridge is provided with at least first and second inlet ports, the cartridge head is arranged to split an incoming flow of liquid into the bypass flow and at least a further flow of liquid and to provide the bypass flow and the further flow of liquid to the first and second inlet ports respectively through respective outlet ports of the cartridge head upon connection of the liquid treatment cartridge to the cartridge head.

Thus, the basic design of liquid treatment cartridges currently in use can be adopted, except that current cartridges have only single chambers filled with a liquid treatment medium or media, which chambers are arranged in series. Existing cartridge heads can therefore be used with the proposed liquid treatment cartridges.

In a variant, the cartridge head includes a variable-ratio flow divider for adjusting a volumetric flow ratio between the bypass flow and the further flow of liquid.

Thus, the cartridge need not contain this relatively expensive hardware and can be of the type that is disposed of or recycled after use. The rate of exhaustion of the ion exchange material in the liquid treatment sections can be adjusted according to circumstances at the point of use. It is noted that the composition of the untreated liquid may be such as to make it necessary to set the bypass flow of liquid to zero using the variable-ratio flow divider.

In an embodiment, the liquid treatment medium of at least one of the first, second and third liquid treatment sections includes a cation exchange material loaded with potassium, and the apparatus is arranged to condition the liquid to have a potassium concentration of at least 30 mg·l⁻¹.

It has been found that potassium concentrations above this value affect the extraction of those soluble components that lend coffee a less bitter but more intensive roasted aroma. The effect is noticeable as an increase in the roasted aroma when the concentration is at least 60 mg·l⁻¹. The concentration may in particular be at least 100 mg·l⁻¹, or even 200 mg·l⁻¹ or more.

In a variant, the apparatus is arranged to condition the liquid to have a potassium concentration of at most 300 mg·l⁻¹. Drinking water with a potassium concentration above this limit, when used to brew coffee, results in the extraction of components that confer a taste reminiscent of burnt foodstuffs on the coffee. This makes it less palatable to the average consumer.

According to another aspect of the invention, there is provided an apparatus for producing a beverage by extraction, for example coffee, including an apparatus for conditioning an aqueous liquid, e.g. drinking water, including at least one of a device according to the invention and an apparatus assembled from a kit of parts according to the invention.

According to another aspect, the method of conditioning an aqueous liquid, e.g. drinking water, is characterised by
obtaining a bypass flow of liquid from the flow of liquid to be treated,
conducting the bypass flow of liquid so as to bypass the first, second and third liquid treatment sections and
uniting the bypass flow of liquid with the at least three sub-flows downstream of the first, second and third liquid treatment sections.

The method makes it possible to meet minimum and maximum recommended values for several interdependent parameters of the liquid, in particular total hardness, carbonate hardness and total mineral content. This is because the number and/or composition of different types of liquid treatment sections can be chosen to suit the composition of the untreated liquid. Relatively efficient use is made of the ion exchange material.

In an embodiment, the first, second and third liquid treatment sections are each liquid-permeable at a respective inlet end, and the sub-flows are created by leading a flow of liquid into a chamber section from which each of the inlet ends is accessible, for example through at least one liquid-permeable device positioned between the liquid treatment sections and the chamber section, e.g. at least one liquid-permeable device separating the chamber section from each of the inlet ends.

This is a relatively compact and efficient manner of setting the volumetric flow ratios between the different sub-flows, and thus the composition of the conditioned liquid.

In a variant of this embodiment, the chamber section and each of the first, second and third liquid treatment sections are contained within a chamber defined in a housing of a liquid treatment device.

The liquid treatment device is thus relatively compact.

In a variant, the liquid treatment device is a replaceable liquid treatment cartridge for connection to a cartridge head by means of a mechanical interface, the mechanical interface being arranged to establish essentially liquid-tight connections between at least one inlet port of the liquid treatment cartridge and respective outlet ports of the cartridge head and between at least one outlet port of the liquid treatment cartridge and respective inlet ports of the cartridge head upon connection of the replaceable liquid treatment cartridge to the cartridge head.

In an embodiment of the method, at least one of the first, second and third liquid treatment sections includes a liquid treatment medium for essentially demineralising water brought into contact with the liquid treatment medium.

In an embodiment, the liquid treatment medium of at least one of the first, second and third liquid treatment sections includes a cation exchange material loaded with potassium.

In a variant of this embodiment, a majority of the cation exchange material included in the liquid treatment medium of at least one of the liquid treatment sections including cation exchange material loaded with potassium is in the potassium form.

The liquid treatment medium of at least one of the first, second and third liquid treatment sections may include a cation exchange material loaded with hydrogen.

In particular, a majority of the cation exchange material included in the liquid treatment medium of at least one of the liquid treatment sections including cation exchange material loaded with hydrogen may be in the hydrogen form.

In an embodiment of the method, the liquid treatment medium of at least one of the first, second and third liquid treatment sections includes weakly acidic cation exchange resin.

The device, e.g. the housing, may include a further liquid treatment section through which the bypass sub-flow is arranged to be led.

In a variant, the treatment in the further liquid treatment section is of a type other than treatment by contacting with an ion exchange material.

The method according to the invention may include the use of a device according to the invention.

According to another aspect, the invention concerns the use of a device according to the invention to condition drinking water, including using the conditioned drinking water to produce a beverage by extraction, for example coffee.

The invention will be explained in further detail with reference to the accompanying drawings, in which:
Fig. 1 is a schematic diagram for illustrating the operation of an apparatus for conditioning an aqueous liquid such as drinking water;
Fig. 2 is a schematic diagram of an apparatus for conditioning an aqueous liquid including a cartridge head and a replaceable liquid treatment cartridge;
Fig. 3 is a cross-sectional view transverse to a principal axis of the liquid treatment cartridge of Fig. 2;
Fig. 4 is a cross-sectional perspective view of a prototype liquid treatment cartridge, with two parallel liquid treatment sections shown for illustrative purposes;
Fig. 5 is a perspective view showing inlet ports of the cartridge of Fig. 4;
Fig. 6 is a perspective view showing an outlet port of the cartridge of Figs. 4 and 5;
Fig. 7 is a detailed cross-sectional view showing a liquid-permeable device at an outlet end of parallel liquid treatment sections arranged within the cartridge of Figs. 4-6;
Fig. 8 is a detailed cross-sectional view showing a liquid distribution device contained within the cartridge of Figs. 4-7;
Fig. 9 is a perspective view of an insert for forming a liquid treatment section within the cartridge of Figs. 4-8; and
Fig. 10 is a bottom view of the insert shown in Fig. 9.

An apparatus for conditioning an aqueous liquid includes an inlet 1 for receiving a flow of liquid to be treated, in particular drinking water, e.g. drinking water from the water mains. The inlet 1 is connected to a variable-ratio flow divider 2. The incoming flow of liquid is split into a first flow of liquid and a bypass flow of liquid in the variable-ratio flow divider 2. The volumetric flow ratio between the first and bypass flow of liquid is set by the variable-ratio flow divider 2 and is adjustable.

The first flow of liquid is distributed over a first liquid treatment section 3, second liquid treatment section 4 and third liquid treatment section 5. Each of the first, second and third liquid treatment sections 3-5 contains a liquid treatment medium including at least one ion exchange material. In effect, the first flow of liquid is split into three sub-flows, each led through a respective one of the first, second and third liquid treatment sections 3-5.

The volumetric flow ratio between the sub-flows is fixed by the layout of the apparatus. The first, second and third liquid treatment sections 3-5 are separated from each other and arranged in parallel in flow sense. Thus, they comprise separated compartments within a single container or they comprise separate containers. The liquid pressure at inlet ends of the liquid treatment sections 3-5 is essentially the same, as is the liquid pressure at their outlet ends.

In a particular embodiment, the liquid treatment sections contain liquid treatment media of different composition. In another embodiment, the composition of the liquid treatment medium in two of the liquid treatment sections 3-5 is essentially the same.

Where the composition is different, the first liquid treatment section 3 may contain a liquid treatment medium for the reduction of at least the carbonate hardness. In this embodiment, the medium may comprise a weakly acidic cation exchange resin in the hydrogen form. Where it does, the majority, e.g. essentially all of the cation exchange material in the first liquid treatment section 3 is at least initially in the hydrogen form. The hydrogen is exchanged for cations in the liquid of the sub-flow passing through the first liquid treatment section 3. The hydrogen reacts with hydrogen carbonate anions to form CO₂.

The second liquid treatment section 4 may, in this example, include a liquid treatment medium for the reduction of total hardness, which is the sum of permanent hardness and carbonate hardness. Carbonate hardness is caused by dissolved magnesium and calcium carbonate in the liquid. Permanent hardness is caused by other calcium and magnesium salts, including in particular calcium and magnesium sulphate. The medium in the second liquid treatment section 4 may comprise a weakly acidic cation exchange resin in the potassium form. In that case, the majority of the cation exchange material in the second liquid treatment section 4 is at least initially in the potassium form. This liquid treatment medium releases potassium in exchange for calcium and magnesium ions without reducing the hydrogen carbonate concentration in the sub-flow of liquid passing through the second liquid treatment section 4. The liquid passing through the second liquid treatment section 4 is thus enriched with potassium. Both the carbonate hardness and the permanent hardness of the sub-flow of liquid led through the second liquid treatment section 4 are reduced.

The third liquid treatment section 5 may, in this example, include a liquid treatment medium for essentially demineralising water brought into contact with the liquid treatment medium. The liquid treatment medium may be a mix of cation exchange resin and anion exchange resin, for example.

In each of the liquid treatment sections 3-5, the liquid treatment medium may be provided in granular form. The particle size distribution may be essentially the same in each of the liquid treatment sections. Other types of liquid treatment media may be admixed with the ion exchange material in one or more of the liquid treatment sections 3-5.

The bypass flow of liquid is led through a bypass liquid treatment section 6 in this example. The bypass liquid treatment section 6 may include a liquid treatment medium for the treatment of liquid by sorption. Examples include activated carbon and materials specifically designed to remove one or more species of heavy metal, e.g. lead scavengers. Absent the release of ions by the medium, the treatment in the bypass liquid treatment section 6 is of a type other than treatment by contacting with an ion exchange material.

In the illustrated example, a further liquid treatment section 7 is provided, in which the three sub-flows led through the first, second and third liquid treatment sections 3-5 are united with each other and with the bypass flow of liquid. In an alternative embodiment, either of the further liquid treatment section 7 and bypass liquid treatment section 6 may be dispensed with. There is in any case at least one mixing location for uniting the three sub-flows and the bypass flow. Mixing may, however, take place in stages.

It is noted that the sub-flow led through the first liquid treatment section 3 will have a carbonate hardness of zero, but be subjected to only a proportional reduction in total hardness. The sub-flow led through the second liquid treatment section 4 will have a carbonate hardness and a permanent hardness of zero after treatment. However, if only these sub-flows were to be re-united, then the resulting mix would have a non-zero carbonate hardness, because the second liquid treatment section 4 does not remove the hydrogen carbonate and the first liquid treatment section 3 does not remove all the calcium and magnesium ions. Adding demineralised liquid to the mix results in a lower carbonate hardness than would otherwise arise.

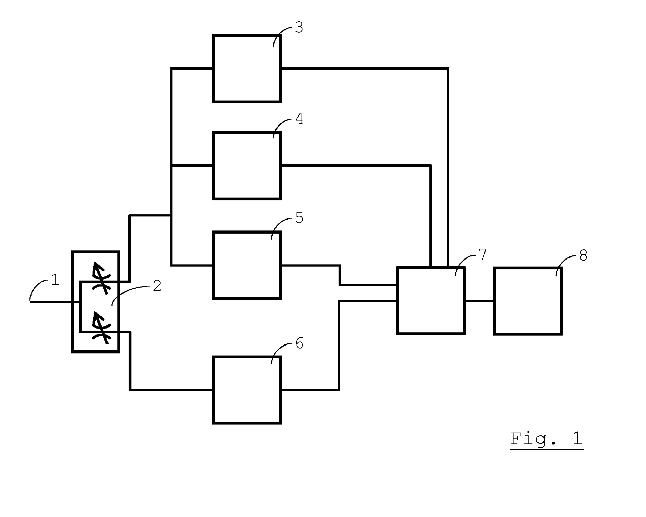

In the illustrated embodiment, the apparatus is connected to an appliance 8 for producing a beverage by extraction, for example a coffee maker. The appliance 8 receives the conditioned liquid. Due to the enrichment with potassium, the resulting beverage is perceived as having a different taste compared with a beverage brewed using liquid of the same composition as that provided at the inlet 1. This is explained in more detail below, following descriptions of two particular implementations of the basic apparatus as illustrated in Fig. 1.

A first embodiment of an apparatus is assembled from a kit of parts including a replaceable liquid treatment cartridge 9 and a cartridge head 10. The apparatus has essentially the configuration of the apparatus shown in Fig. 1 in terms of the arrangement of liquid treatment sections, except that there is no equivalent of the bypass liquid treatment section 6.

The cartridge head 10 includes an inlet connector 11 for connecting the cartridge head 10 to a supply of liquid to be treated. This may be a connection to the water mains or a tank for storing drinking water to be treated, for example.

The cartridge head 10 and replaceable liquid treatment cartridge 9 are provided with respective components of a mechanical interface for connecting the replaceable liquid treatment cartridge 9 to the cartridge head 10 so as to establish essentially liquid-tight connections between a first outlet port 12 of the cartridge head 10 and a first inlet 13 of the cartridge 9, between a second outlet port 14 of the cartridge head 10 and a second inlet 15 of the replaceable liquid treatment cartridge 9 and between an inlet port 16 of the cartridge head 10 and an outlet 17 of the replaceable liquid treatment cartridge 9. The liquid-tight connections are established by locking the replaceable liquid treatment cartridge 9 in place in a releasable manner. A suitable implementation of the mechanical interface is described in WO 2008/122496 A1, the contents of which are hereby incorporated by reference.

The cartridge head 10 includes a variable-ratio flow divider 18. In use, a flow of liquid to be treated passes from the inlet connector 11 to the variable-ratio flow divider 18 where it is split into a first flow of liquid and a bypass flow of liquid. The ratio between the volumetric flow rates of the first and bypass flows can be adjusted by adjusting the settings of the variable-ratio flow divider 18 using an adjustment mechanism 19, which may be a spindle with an exposed socket for inserting a tool such as an Allen key. Cartridge heads 10 of this type have been in use for some time. A suitable implementation of the variable-ratio flow divider 18 is described in WO 2009/101188 A1, the contents of which are hereby incorporated by reference.

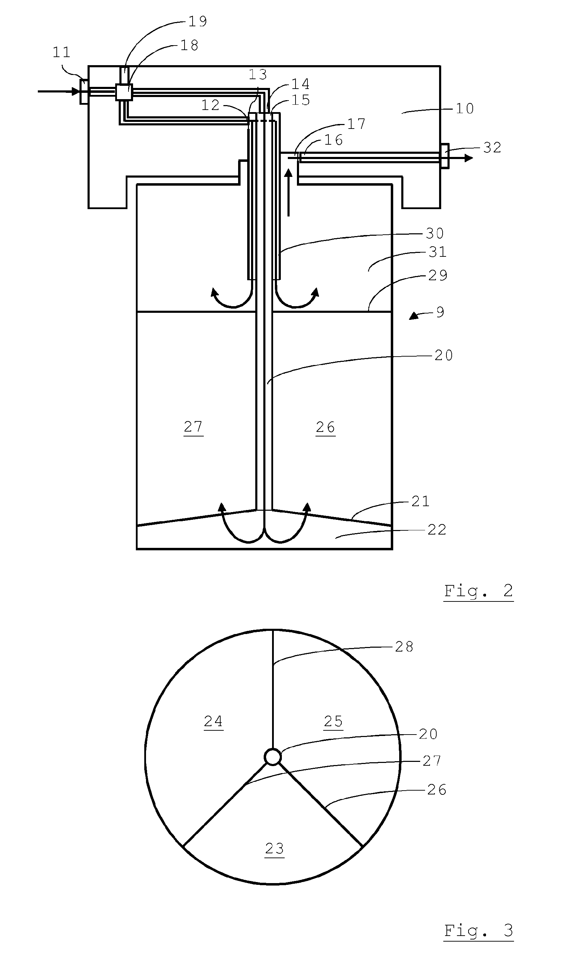

The replaceable liquid treatment cartridge 9 comprises a housing defining a chamber. The housing has a principal, in this example longitudinal, axis (not shown in Fig. 2). The chamber is rotationally symmetric with respect to this principal axis. The first and second inlets 13,15, as well as the outlet 17 are arranged at one longitudinal end of the replaceable liquid treatment cartridge 9, namely the end provided with the cartridge part of the mechanical interface.

In use, the first flow of liquid passes through the first outlet port 12 and the first inlet 13 into a fall tube 20. The fall tube 20 is essentially empty. It is essentially aligned with the principal axis. The fall tube 20 conducts the first flow of liquid to a location in the chamber removed from the end at which the inlets 13,15 and outlet 17 are provided, indeed closer to the opposite longitudinal end. There, an essentially empty chamber section 22 is defined by a liquid-permeable device 21. The liquid-permeable device 21 may be a frame carrying a fleece or other sheet of material suitable for mechanical filtration. It may also be an essentially self-supporting mesh. It functions to keep particles of liquid treatment medium out of the chamber section 22, so that an essentially rotationally invariant pressure distribution is established. Given that the fall tube 20 is essentially aligned with the principal axis of the replaceable liquid treatment cartridge 9 and the chamber has a rotationally symmetric shape, the pressure varies only radially with respect to the principal axis. The combination of the chamber section 22 and the liquid-permeable device 21 thus functions as a flow distribution device.

A section of the chamber adjacent the chamber section 22 and separated from it by the liquid-permeable device 21 is sub-divided into liquid treatment sections 23-25, three in number in the illustrated example. This is achieved by partitioning walls 26-28 (Fig. 3) extending radially with respect to the principal axis from the fall tube 20 to a radially outer wall of the chamber. The liquid treatment sections sections 23-25 correspond to the liquid treatment sections sections 3-5 of the apparatus described with reference to Fig. 1 as concerns the media provided in them.

Inlet ends of the liquid treatment sections 23-25 are situated where they adjoin the liquid-permeable device 21. A further liquid-permeable device 29 is situated at an opposite end and arranged to retain liquid treatment media provided in the liquid treatment sections sections 23-25. The combination of the empty chamber section 22 and the liquid-permeable device 21 is arranged to split the first flow of liquid into three sub-flows, which are each led through only one respective liquid treatment section 23-25, bypassing the others. Because the liquid treatment sections 23-25 are of essentially the same length and contain liquid treatment media with a similar flow resistance, the cross-sectional areas of the sectors defined by the inlet ends of the liquid treatment sections 23-25 determine the volumetric flow rate ratios between the first, second and third sub-flows. In an alternative embodiment, the replaceable liquid treatment cartridge 9 is provided with an adjustable device for setting at least one of the volumetric flow rate ratios between the first, second and third sub-flows.

The bypass flow of liquid passes from the variable-ratio flow divider 18 through the second outlet port 14 and the second inlet 15 into the replaceable liquid treatment cartridge 9, in use. There, an annular conduit section 30 arranged around an upper section of the fall tube 20 leads the by-bypass flow into a further liquid treatment section 31 defined in the chamber of the replaceable liquid treatment cartridge 9. The bypass flow of liquid thus bypasses the first, second and third liquid treatment sections 23-25. This further liquid treatment section 31 corresponds to the further liquid treatment section 7 discussed above with reference to Fig. 1 as far as the liquid treatment medium contained therein is concerned. The further liquid treatment section 31 forms a mixing location, where the first to third sub-flows and the bypass flow are united and thus mixed. The mix of treated liquid then passes through the outlet 17 and the inlet port 16 to an outlet connector 32 for connection to an appliance such as the appliance 8 mentioned above with reference to Fig. 1.

To facilitate manufacturing of the replaceable liquid treatment cartridge 9, the fall tube 20, annular conduit section 30, partitioning walls 26-28 and liquid-permeable devices 21,29 may be assembled as a unit prior to insertion into a lower half of the cartridge housing, which is then closed by joining the latter with an upper half of the cartridge housing. Alternatively, an insert formed by the liquid-permeable device 21, fall tube 20 and annular conduit section 30 may be inserted first, whereupon the partitioning walls 26-28 are inserted so as to be supported by the already inserted assembly. Then, the liquid treatment sections 23-25 can be filled with liquid treatment media and the further liquid-permeable device inserted.

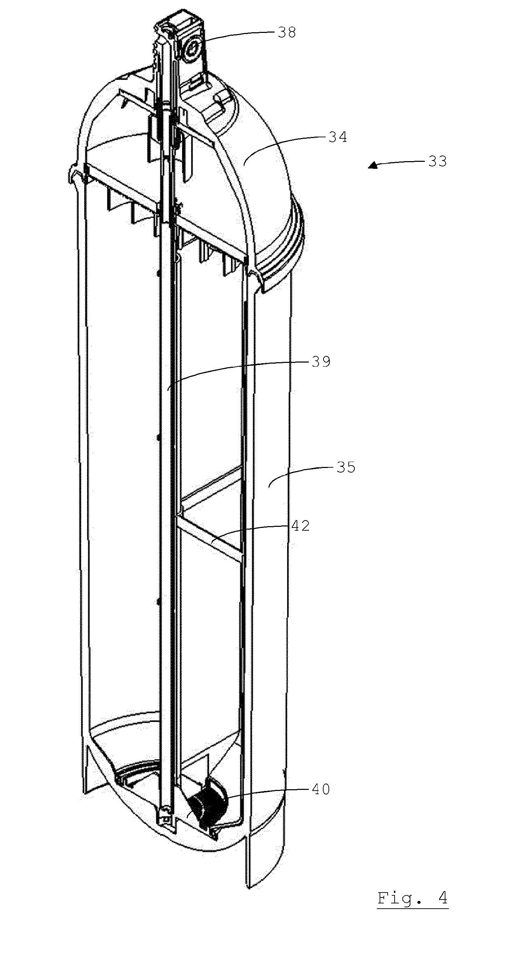

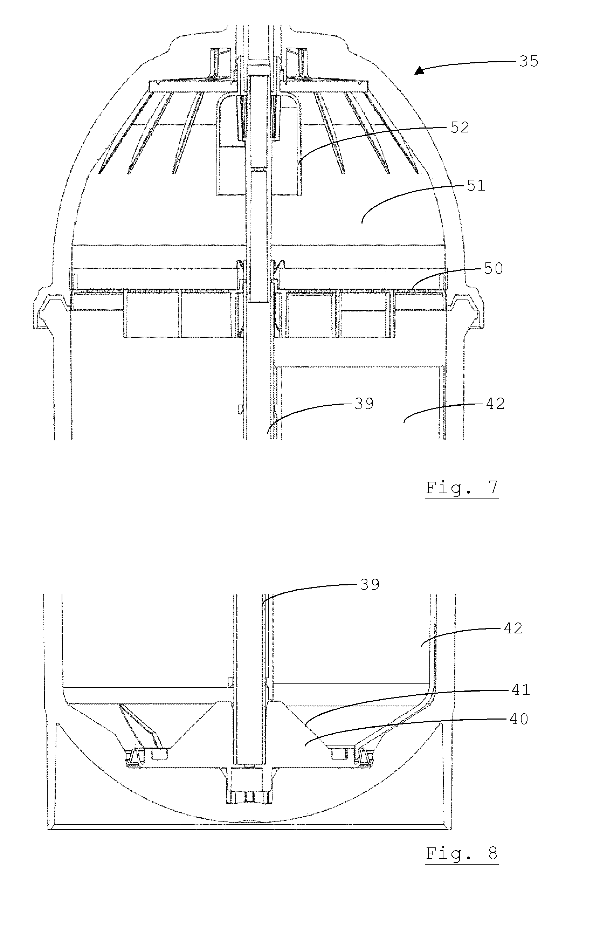

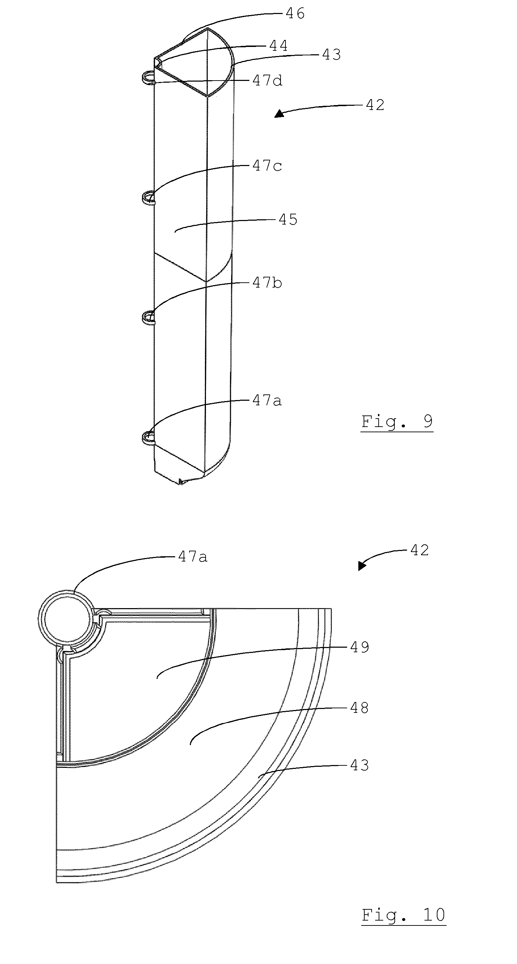

In a variant (Figs. 4-10), a liquid treatment cartridge 33 of essentially the same configuration as the one discussed above with reference to Figs. 2-3 is provided. This variant is even easier to assemble. The corresponding cartridge head is of a similar configuration as the one of Fig. 2, including part of a mechanical interface as disclosed in WO 2008/122496 A1 and variable-ratio flow divider as disclosed in WO 2009/101188 A1. For reasons of clarity, the illustrated cartridge 33 as shown has only two parallel liquid treatment sections, in addition to a further liquid treatment section corresponding to the further liquid treatment section 31 of the re-replaceable liquid treatment cartridge 9 of Figs. 2-3.

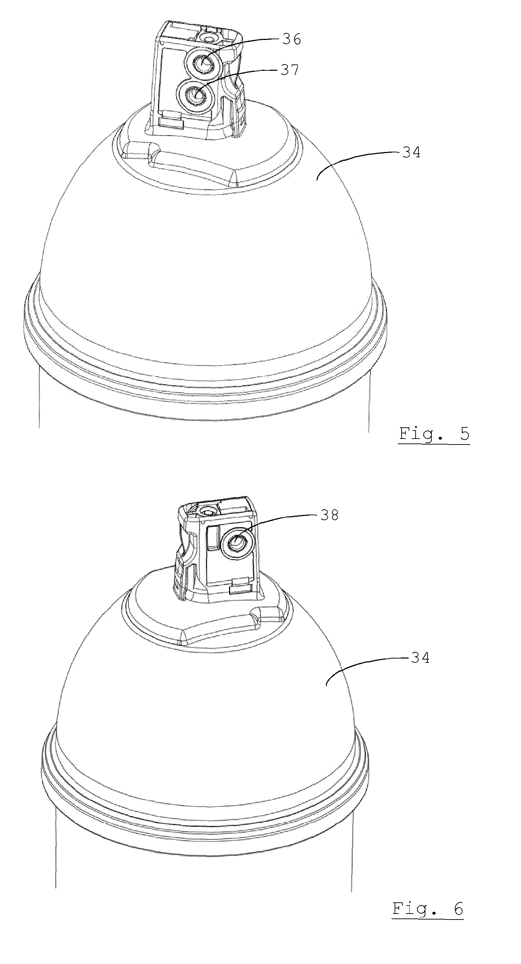

The cartridge 33 has a housing comprised of two parts 34,35 joined together, e.g. welded together, at flanges to define a chamber. A first part 34 is provided with part of the mechanical interface for joining the cartridge 33 to a cartridge head. First and second inlets 36,37 (Fig. 5) and an outlet 38 (Fig. 6) correspond to those of the replaceable liquid treatment cartridge 9 of Figs. 2-3.

In use, the first inlet 36 receives the first flow of liquid, which passes through a fall tube 39 to a chamber section 40 defined at a first longitudinal end of the chamber. This chamber section 40 corresponds to the chamber section 22 of the embodiment of Figs. 2-3. It is partly delimited by a liquid-permeable device 41 to form a flow distribution device.

An insert 42 (Figs. 4,9,10) for forming a liquid treatment section has a radially outer wall 43, radially inner wall 44 and two essentially radially extending walls 45,46. The radially outer wall 43 conforms to a section of the wall of the cartridge housing defining the chamber section in which parallel liquid treatment sections are arranged. The radially inner wall 44 joins the radially extending walls 45,46 at their radially inner ends. Connectors 47a-d are provided to allow the fall tube 39 to support the insert 42. The walls 43-46, together with a curved wall section 48 extending radially inwards from the radially outer wall 43 and joined to the radially extending walls 45,46 define a container open at an inlet end and an outlet end. At the inlet end, the curved wall section 48, the radially extending walls 45,46 and the radially inner wall 44 define an inlet aperture 49, in which an optional liquid-permeable device (not shown) for retaining liquid treatment media may be arranged. In that case, the insert 42 may be filled with a liquid treatment medium prior to insertion into the second part 35 of the housing.

One or more further inserts with the connectors at a slightly different position could be inserted to form further liquid treatment sections. The remainder of the chamber section in which the insert 42 is positioned forms a final liquid treatment section, when filled with the appropriate liquid treatment medium.

A further liquid-permeable device 50 is provided at an opposite end of the chamber section in which parallel liquid treatment sections are defined. It is arranged to retain the liquid treatment media of these liquid treatment sections. It is situated between them and a further liquid treatment section 51 defined in a section of the chamber in the cartridge housing delimited by the first housing part 34. In use, the bypass flow of liquid passes through an annular conduit section 52 of similar configuration to that of the cartridge 9 of Figs. 2 and 3. There, the sub-flows that have passed through the parallel liquid treatment sections are united with the bypass flow of liquid and subjected to treatment by the liquid treatment medium contained in the further liquid treatment section 51.

The media in the further liquid treatment section 51 and the parallel liquid treatment sections defined by the insert 42, any further inserts and the remainder of the chamber section in which the insert 42 is situated are as described above with reference to Fig. 1.

To test the effect of the proposed enrichment with potassium, a prototype of the replaceable liquid treatment cartridge 33 with only the one insert 42 was made. To obtain water with lower potassium concentrations, the conditioned water was mixed to various degrees with water conditioned by means of a conventional cartridge of exactly the same construction but without the insert 42 and filled with weakly acidic cation exchange resin in the hydrogen form. To obtain water with higher potassium concentrations, the conditioned water was mixed to various degrees with water conditioned by means of a conventional cartridge of exactly the same construction but without the insert 42 and filled with weakly acidic cation exchange resin in the potassium form. The effect obtained by this type of mixing corresponds to that obtainable using a configuration as displayed in Fig. 1.

In the prototype cartridge, the insert 42 formed a compartment occupying 25 % of the available volume in the longitudinal section in which it was situated. The remainder of that section thus formed a second liquid treatment section occupying 75 % of the volume. The further liquid treatment section 51 was filled only with activated carbon.

The compartment in the insert 42 was filled with weakly acidic macroporous cation exchange resin based on polyacrylate (in the example Lewatit CNP P resin, available from Lanxess) and loaded with potassium. A small amount of activated carbon was admixed. No other ion exchange resin was present.

The remaining parallel liquid treatment section was filled with the same resin but completely in the hydrogen form.

The water conditioned using this prototype cartridge was obtained with a bypass setting of 20 %, meaning that 20 % by volume of the conditioned water passed only through the further liquid treatment section 51.

The water with which the conditioned water obtained with the prototype cartridge was mixed was obtained using a conventional cartridge and a specially prepared cartridge, each having only one liquid treatment section followed by a further liquid treatment section (i.e. the cartridge 33 as shown in Fig. 4 without the insert 42).

The conventional cartridge was used to obtain the water with a low potassium concentration. In this cartridge, the majority by (dry) volume of the liquid treatment medium in the single liquid treatment section containing ion exchange resin was formed by the same weakly acidic cation exchange resin in the hydrogen form. A minority by volume comprised silver-loaded weakly acidic cation exchange resin. A further minority comprised activated carbon. Some of the weakly acidic cation exchange resin in the hydrogen form was in dried form. The weakly acidic cation exchange resin in the potassium form formed less than 10 % of the total by volume, as did the activated carbon. The further liquid treatment section 51 contained only activated carbon. The water conditioned using this conventional cartridge was obtained with a bypass setting of 40 %, meaning that 40 % of the treated water by volume passed only through the further liquid treatment section 51.

In the specially prepared cartridge used to obtain the water with a very high potassium concentration, the majority by volume of the liquid treatment medium in the single liquid treatment section containing ion exchange resin was formed by the same weakly acidic cation exchange resin in the potassium form. A minority by volume comprised activated carbon. The activated carbon formed about 5 % of the total medium by volume. The further liquid treatment section 51 contained only activated carbon. The water conditioned using this specially prepared cartridge was obtained with a bypass setting of 0 %, meaning that all of the treated water passed through the cation exchange resin in the potassium form before passing through the activated carbon in the further liquid treatment section 51.

Table 1 shows the compositions of the untreated water (water sample 1); of two samples of water (water samples 2 and 3) conditioned with the conventional cartridge containing the weakly acidic cation exchange resin in the hydrogen form (at the bypass settings mentioned); and of two samples (water samples 4 and 5) of water conditioned with the prototype cartridge in the manner described above. The water obtained by treatment with the cartridge containing only cation exchange resin in the potassium form was not analysed separately, as it was not used unblended.

| Parameter | Unit | Water sample 1 | Water sample 2 | Water sample 3 | Water sample 4 | Water sample 5 |
|---|---|---|---|---|---|---|
| Conductivity | µS·cm^{- 1} | 867.0 | 708.0 | 702.0 | 738.0 | 759.0 |
| pH | | 8.1 | 6.9 | 7.1 | 6.8 | 7.0 |
| Carbonate hardness | °dH | 12.3 | 6.4 | 6.0 | 4.9 | 5.2 |
| Total hardness | °dH | 20.3 | 14.8 | 14.1 | 7.4 | 6.2 |

**TABLE 1 - Composition of conditioned water samples**

| | | | | | | |
|---|---|---|---|---|---|---|
| Permanent hardness | °dH | 8.0 | 8.4 | 8.1 | 2.6 | 1.0 |
| [Cl⁻] | mg·l⁻¹ | 71.4 | 69.6 | 69.7 | 70.2 | 71.4 |
| [NO₂⁻] | mg·l⁻¹ | 0 | 0 | 0 | 0 | 0.0 |
| [NO₃⁻] | mg·l⁻¹ | 2.1 | 1.9 | 2.0 | 1.8 | 1.7 |
| [PO₄³⁻] | mg·l⁻¹ | 1.0 | 1.1 | 1.0 | 1.0 | 1.0 |
| [SO₄²⁻] | mg·l⁻¹ | 139.8 | 137.0 | 137.2 | 137.8 | 138.8 |
| [HCO₃⁻] | mg·l⁻¹ | 267.1 | 138.8 | 130.5 | 105.7 | 112.4 |
| [Na⁺] | mg·l⁻¹ | 36.9 | 36.8 | 37.0 | 29.1 | 30.2 |
| [NH₄⁺] | mg·l⁻¹ | 0 | 0 | 0 | 0 | 0.0 |
| [K⁺] | mg·l⁻¹ | 2.5 | 2.5 | 2.6 | 97.7 | 111.1 |
| [Ca²⁺] | mg·l⁻¹ | 107.6 | 70.6 | 66.6 | 30.4 | 25.8 |
| [Mg²⁺] | mg·l⁻¹ | 23.0 | 21.7 | 20.8 | 13.6 | 11.2 |

It will be apparent that the prototype cartridge was relatively effective in enriching the water with potassium and reducing the permanent hardness. In other respects, its performance was similar to that of the conventional cartridge.

To determine the effect of the enrichment with potassium on the taste of coffee brewed with water having a relatively high potassium concentration, a test was conducted over two days. Samples having the composition set out in Table 2 were prepared for use on the first day. Samples having the composition set out in Table 3 were prepared for use of the second day.

**TABLE 2 - Composition of samples of drinking water used to prepare coffee tasted on first day of testing**

| Parameter | Unit | Sample 1-1 | Sample 1-2 | Sample 1-3 | Sample 1-4 |
|---|---|---|---|---|---|
| Conductivity | µS·cm⁻¹ | 729.0 | 759.0 | 702.0 | 717.0 |
| pH | | 7.1 | 7.0 | 7.1 | 7.2 |
| Acid neutralising capacity (DIN 38409-7) pH 4.3 | mmol·l⁻¹ | 2.0 | 1.9 | 2.1 | 2.1 |
| Carbonate hardness | °dH | 5.5 | 5.2 | 6.0 | 5.8 |
| Total hardness | °dH | 10.2 | 6.2 | 14.1 | 12.1 |
| Permanent hardness | °dH | 4.7 | 1.0 | 8.1 | 6.3 |
| [Cl⁻] | mg·l⁻¹ | 69. 9 | 71.4 | 69.7 | 70.1 |
| [NO₂⁻] | mg·l⁻¹ | 0 | 0.0 | 0 | 0 |
| [NO₃⁻] | mg·l⁻¹ | 2.0 | 1.7 | 2.0 | 2.0 |
| [PO₄³⁻] | mg·l⁻¹ | 1.0 | 1.0 | 1.0 | 1.0 |
| [SO₄²⁻] | mg·l⁻¹ | 137.3 | 138.8 | 137.2 | 137.4 |
| [HCO₃⁻] | mg·l⁻¹ | 120.0 | 112.4 | 130.5 | 125.5 |
| [Na⁺] | mg·l⁻¹ | 33.8 | 30.2 | 37.0 | 35.7 |
| [NH₄⁺] | mg·l⁻¹ | 0 | 0.0 | 0 | 0 |
| [K⁺] | mg·l⁻¹ | 56.6 | 111.1 | 2.6 | 30.9 |
| [Ca²⁺] | mg·l⁻¹ | 46.5 | 25.8 | 66.6 | 56.0 |
| [Mg²⁺] | mg·l⁻¹ | 16.0 | 11.2 | 20.8 | 18.4 |

**TABLE 3 - Composition of samples of drinking water used to prepare coffee tasted on second day of testing**

| Parameter | Unit | Sample 2-1 | Sample 2-2 | Sample 2-3 | Sample 2-4 |
|---|---|---|---|---|---|
| Conductivity | µS·cm⁻¹ | 708.0 | 738.0 | 993.0 | 1101.0 |
| pH | | 6.9 | 6.8 | 7.6 | 8.0 |
| Acid neutralising capacity (DIN 38409-7) pH 4.3 | mmol·l⁻¹ | 2.3 | 1.8 | 3.6 | 4.4 |
| Carbonate hardness | °dH | 6.4 | 4.9 | 4.0 | 2.5 |
| Total hardness | °dH | 14.8 | 7.4 | 4.0 | 2.5 |
| Permanent hardness | °dH | 8.4 | 2.6 | 0 | 0 |
| [Cl⁻] | mg·l⁻¹ | 69.6 | 70.2 | 71.34 | 71.2 |
| [NO₂⁻] | mg·l⁻¹ | 0.0 | 0.0 | 0.0 | 0.0 |
| [NO₃⁻] | mg·l⁻¹ | 1.9 | 1.8 | 1.8 | 1.8 |
| [PO₄³⁻] | mg·l⁻¹ | 1.1 | 1.0 | 1.0 | 1.0 |
| [SO₄²⁻] | mg·l⁻¹ | 137.0 | 137.8 | 139.8 | 138.7 |
| [HCO₃⁻] | mg·l⁻¹ | 138.8 | 105.7 | 217.2 | 264.9 |
| [Na⁺] | mg·l⁻¹ | 36.8 | 29.1 | 15.8 | 9.6 |
| [NH₄⁺] | mg·l⁻¹ | 0 | 0 | 0.0 | 0.0 |
| [K⁺] | mg·l⁻¹ | 2.5 | 97.7 | 236.1 | 301.6 |
| [Ca²⁺] | mg·l⁻¹ | 70.6 | 30.4 | 16.9 | 10.5 |
| [Mg²⁺] | mg·l⁻¹ | 21.7 | 13.6 | 7.2 | 4.5 |

Carbonate hardness corresponds to the concentration of alkaline magnesium and calcium minerals, converted to the equivalent concentration of CaCO₃, expressed in °dH.

Sample 1-1 was a mix of equal parts of water obtained using the conventional cartridge and water obtained using the prototype cartridge (corresponding to water samples 3 and 5 in Table 1). Sample 1-2 consisted only of water obtained using the prototype cartridge (corresponding to water sample 5 in Table 1). Sample 1-3 consisted only of water obtained using the conventional cartridge (water sample 3 in Table 1). Sample 1-4 consisted of a mix of one part water obtained using the prototype cartridge and three parts water obtained using the conventional cartridge (water samples 3 and 5 in Table 1).

Sample 2-1 consisted only of water obtained using the conventional cartridge (water sample 2 in Table 1). Sample 2-2 consisted only of water obtained using the prototype cartridge (water sample 4 in Table 1). Sample 2-3 was a mix of equal volumes of water obtained using the prototype cartridge and water obtained using the specially prepared cartridge having only cation exchange resin in the potassium form. Sample 2-4 was a mix of one part water obtained using the prototype cartridge and three parts water obtained using the specially prepared cartridge having only cation exchange resin in the potassium form.

The samples were used to brew coffee with a Karlsbader coffee maker. Each coffee sample was obtained using 40.1 g ground coffee and 610 g of water, boiled and then cooled to 95 °C. The coffee was poured into cups warmed to 60 °C and left to stand for three minutes before being sampled by the test persons. The resulting temperature of the coffee was between 49.8 °C and 56.1 °C.

On each day, seven test persons schooled in tasting coffee were asked to describe the coffee samples in terms of taste, aftertaste and mouth sensation. This was a simple descriptive test in accordance with German standard DIN 10964. Subsequently, the group gave a consensual comparative description. The individual descriptions were compiled into a group description.

Subsequently, the coffee samples were ranked in terms of balance and roasted aroma in accordance with German standard DIN 10963. The panel of test persons understood this term to comprise attributes such as earthy, smoky, roasted, burning. The term is used to define the strong aroma components of the coffee.

The results of the tests are set out in Tables 4-8. In Tables 4-7, the ranking sum is obtained by summing the positions of the samples concerned over the rankings provided by the seven test persons.

**TABLE 4 - Ranking in terms of balance of samples tasted on the first day**

| Rank (highest first) | Ranking sum | Sample | [K⁺] |
|---|---|---|---|
| 1 | 7 | 1-1 | 56.6 mg·l⁻¹ |
| 2 | 15 | 1-2 | 111.1 mg·l⁻¹ |
| 3 | 23 | 1-3 | 2.6 mg·l⁻¹ |
| 4 | 25 | 1-4 | 30.9 mg·l⁻¹ |

**TABLE 5 - Ranking in terms of roasted aroma of samples tasted on the first day**

| Rank (highest first) | Ranking sum | Sample | [K⁺] |
|---|---|---|---|
| 1 | 11 | 1-2 | 111.1 mg·l⁻¹ |
| 2 | 18 | 1-3 | 2.6 mg·l⁻¹ |
| 2 | 18 | 1-4 | 30.9 mg·l⁻¹ |
| 3 | 23 | 1-1 | 56.6 mg·l⁻¹ |

**TABLE 6 - Ranking in terms of balance of samples tasted on the second day**

| Rank (highest first) | Ranking sum | Sample | [K⁺] |
|---|---|---|---|
| 1 | 13 | 2-1 | 2.5 mg·l⁻¹ |
| 2 | 14 | 2-2 | 97.7 mg·l⁻¹ |
| 3 | 21 | 2-3 | 236.1 mg·l⁻¹ |
| 4 | 22 | 2-4 | 301.6 mg·l⁻¹ |

**TABLE 7 - Ranking in terms of roasted aroma of samples tasted on the second day**

| Rank (highest first) | Ranking sum | Sample | [K⁺] |
|---|---|---|---|
| 1 | 11 | 2-4 | 301.6 mg·l⁻¹ |
| 2 | 17 | 2-3 | 236.1 mg·l⁻¹ |
| 2 | 17 | 2-2 | 97.7 mg·l⁻¹ |
| 3 | 25 | 2-1 | 2.5 mg·l⁻¹ |

**TABLE 8 - Summary of consensual descriptive test results for all samples**

| Sample | [K⁺] | Description | Mouth feel | Aftertaste |
|---|---|---|---|---|
| 2-1 | 2.5 mg·l⁻¹ | This sample was predominantly found to be balanced. It was also characterised as the mildest of the samples of the second day. The panellists detected an intensive roasted aroma. The coffee was slightly to clearly bitter and slightly acid. The majority tasted an unobtrusive sweetness at the end of tasting. | Slightly oily and covering the mouth. Slightly dry. | Clear and long lasting aroma of roasted coffee and bitterness. Only a slight and less intensive acid note was detectable. |
| 1-3 | 2.6 mg·l⁻¹ | Unbalanced, in particular in comparison to samples 1-1 and 1-2. The acid note was clearer than for those other samples, the roasted aroma stronger, but occurring relatively late. A slight bitterness was detected by most panellists and a slight sweetness towards the end of the tasting period by some. | Sliding out of the mouth/ slightly oily and covering the mouth. | Fading acidity and fading bitter note. Lasting strong aroma of roasted coffee. Some panellists continued to detect a slightly sweet taste. |
| 1-4 | 30.9 mg·l⁻¹ | The majority of the panellists found this sample unbalanced, a few slightly balanced. The panellists detected a clear aroma of roasted coffee. The bitter notes were relatively intense and the acid tones less intensive compared to samples 1-3 and 1-2. | Oily and covering the mouth. Some panellists characterised the coffee as dry or giving a burning or scratching sensation. | Long lasting aroma of roasted coffee and slight but fading acid taste. |
| 1-1 | 56.6 mg·l⁻¹ | This sample was described as the most balanced of all four samples tested on the first day by all panellists. It was also described as the mildest. A clear aroma of roasted coffee and a slight bitter note were present. The majority of the panellists detected a slightly acid note and a slight sweetness from the beginning. | Sliding out of the mouth and giving a slightly dry sensation. | Clear aroma of roasted coffee, slightly fading bitterness and with a slightly acid note in the background. |
| 2-2 | 97.7 mg·l⁻¹ | The majority of the panellists found this sample to be less balanced than sample 2-1. It had the clearest aroma of roasted coffee of all four samples tested on the second day and was described overall as strong. The aroma of roasted coffee was described by some as giving a slight burning and earthy sensation. The majority of the panellists found the bitterness to be more intensive than for sample 2-1. A slight to clear acidity was detectable and for some a slight sweetness towards the end of the tasting period. | Sliding out of the mouth. Some panellists also found the coffee dry and astringent. | Clear and lasting aroma of roasted coffee. Constant bitterness and slightly fading acid note. |
| 1-2 | 111.1m g·l⁻¹ | This sample was described as balanced by all panellists, but less balanced than sample 1-1. It differed from sample 1-1 in having a clearer roasted aroma, a slightly more pronounced slight to clear acidity and a slightly less pronounced bitterness. Some panellists perceived a slight but less strong sweetness than sample 1-1. | Sliding out of the mouth and giving a slightly dry sensation. | Lasting aroma of roasted coffee and lasting bitterness. Fading acid note. |
| 2-3 | 236.1 mg·l⁻¹ | Most panellists found this sample to be balanced. They all described it as having a clear roasted aroma and as being clearly bitter, the bitter taste tending to increase. A slight acidity was present, which the majority considered to increase. The sample was also rather sweet. | Very smooth and full. | Clear coffee note and bitterness. Fading acid note and hardly any sweetness. |
| 2-4 | 301.6 mg·l⁻¹ | The panellists described this sample as less balanced than sample 2-3. This sample was the strongest and reminiscent of espresso. The coffee had a strong roasted aroma, which the majority described as smoky or burning. It was clearly bitter and slightly to clearly acid. | Oily and covering the mouth. Dry and astringent. | Slightly fading aroma of roasted coffee and for the most part fading acidity. Some panellists detected a faint sweetness. |

The results show that the roasted aroma is perceived as about the same for potassium concentrations of 2.5 and 30 mg·l⁻¹. A minimum concentration of 30 mg·l⁻¹ is required to achieve an effect. The roasted aroma becomes milder at concentrations of between 30 mg·l⁻¹ and 60 mg·l⁻¹, but then becomes stronger than when water obtained by means of a conventional cartridge is used to brew the coffee. It then becomes ever more intensive with rising potassium concentration. At a concentration of 300 mg·l⁻¹, the coffee starts to cause a burning sensation.

The results show that it is possible to adjust the taste of coffee to conform to regional preferences (a strong roasted aroma is preferred in some countries but not in others) by varying the mineral composition, for which the liquid treatment devices described herein are very suitable.

The invention is not limited to the embodiments described above, which may be varied within the scope of the accompanying claims.

For example, the apparatus shown schematically in Fig. 1 can also be implemented using separate cartridges for each liquid treatment section and an appropriate manifold or multi-cartridge filter head.

### LIST OF REFERENCE NUMERALS

- 1: - Inlet
- 2: - Variable-ratio flow divider
- 3: - 1^{st} liquid treatment section
- 4: - 2^{nd} liquid treatment section
- 5: - 3^{rd} liquid treatment section
- 6: - Bypass liquid treatment section
- 7: - Downstream liquid treatment section
- 8: - Appliance
- 9: - Liquid treatment cartridge
- 10: - Cartridge head
- 11: - Inlet connector
- 12: - First outlet port
- 13: - First inlet
- 14: - Second outlet port
- 15: - Second inlet
- 16: - Inlet port
- 17: - Outlet
- 18: - Variable-ratio flow divider
- 19: - Adjustment mechanism
- 20: - Fall tube
- 21: - Liquid-permeable device
- 22: - Chamber section
- 23: - First liquid treatment section
- 24: - Second liquid treatment section
- 25: - Third liquid treatment section
- 26: - Partitioning wall
- 27: - Partitioning wall
- 28: - Partitioning wall
- 29: - Further liquid-permeable device
- 30: - Annular conduit section
- 31: - Further liquid treatment section
- 32: - Outlet connector
- 33: - Liquid treatment cartridge
- 34: - First housing part
- 35: - Second housing part
- 36: - First inlet
- 37: - Second inlet
- 38: - Outlet
- 39: - Fall tube
- 40: - Chamber section
- 41: - Liquid-permeable device
- 42: - Insert
- 43: - Radially outer wall
- 44: - Radially inner wall
- 45: - First radially extending wall
- 46: - Second radially extending wall
- 47a-d: - Connectors
- 48: - Curved wall section
- 49: - Inlet aperture
- 50: - Further liquid-permeable device
- 51: - Further liquid treatment section
- 52: - Annular conduit section

## Claims

1. Device for conditioning an aqueous liquid, e.g. drinking water, including:
at least one outlet (17;38) for the conditioned liquid;
at least one inlet (1;13,15;36,37) for receiving a flow of liquid to be treated; and
at least first, second and third liquid treatment sections (3,4,5;23,24,25), arranged in parallel in flow sense, each containing a liquid treatment medium including at least one ion exchange material,
wherein the device is arranged to create at least three sub-flows of liquid from a first flow of liquid to be treated by distributing the first flow over the first, second and third liquid treatment sections (3,4,5;23,24,25), **characterised in that**
the device is arranged to obtain at least a bypass flow of liquid, to conduct the bypass flow through the device so as to bypass each of the first, second and third liquid treatment sections (3,4,5;23,24,25) and to unite the bypass flow with the at least three sub-flows upstream of the at least one outlet (17;38).

2. Device according to claim 1,
wherein at least one of the first, second and third liquid treatment sections (3,4,5;23,24,25) includes a liquid treatment medium for essentially demineralising water brought into contact with the liquid treatment medium.

3. Device according to claim 1 or 2,
wherein the liquid treatment medium of at least one of the first, second and third liquid treatment
sections (3,4,5;23,24,25) includes a cation exchange material loaded with potassium.

4. Device according to any one of the preceding claims,
wherein the liquid treatment medium of at least one of the first, second and third liquid treatment sections (3,4,5;23,24,25) includes a cation exchange material loaded with hydrogen.

5. Device according to any one of the preceding claims,
wherein the device includes a housing (34,35),
the housing (34,35) being provided with at least one outlet port and at least one inlet port,
wherein each of the outlets (17;38) corresponds to a respective one of the outlet ports and each of the inlets (13,15;36,37) corresponds to a respective one of the inlet ports, and
wherein the first, second and third liquid treatment sections (23,24,25) are arranged within the housing (34,35).

6. Device according to claim 5,
wherein the device is a replaceable liquid treatment cartridge for connection to a cartridge head (10) by means of a mechanical interface, and
wherein the mechanical interface is arranged to establish essentially liquid-tight connections between the at least one inlet port (13,15;36,37) and respective outlet ports (12,14) of the cartridge head (10) and between the at least one outlet port (17;38) and respective inlet ports (16) of the cartridge head (10) upon connection of the replaceable liquid treatment cartridge to the cartridge head (10).

7. Device according to claim 5 or 6,
wherein a device for distributing a flow of liquid received through at least one, e.g. only one, of the at least one inlet ports (13,15;36,37) over the first, second and third liquid treatment sections (23,24,25) is arranged within the housing (34,35).

8. Device according to any one of claims 5-7,
wherein a mixing location (7;31;51) is provided within the housing (34,35) for uniting the bypass flow with the at least three sub-flows.

9. Device according to any one of claims 5-8,
wherein the housing (34,35) includes a chamber extending in an axial direction with respect to a principal axis of the chamber,
wherein the first, second and third liquid treatment sections (23,24,25) are delimited by at least one wall (26,27,28;44,45,46) partitioning at least an axial section of the chamber into sections arranged in parallel in flow sense.

10. Device according to claim 9,
wherein the partitioning walls (26,27,28;44,45,46) delimiting at least one of the first, second and third liquid treatment sections (23,24,25) are part of at least one insert (42).

11. Kit of parts for forming an apparatus for conditioning an aqueous liquid, e.g. drinking water, including:
a cartridge head (10) for connection to at least one supply of liquid to be treated; and
a replaceable liquid treatment cartridge comprising at least one inlet port (13,15;36,37), at least one outlet port (17;38) and a device (9;33) according to any one of the preceding claims,
wherein the cartridge head (10) and the liquid treatment cartridge (9;33) include respective components of a mechanical interface for connecting the replaceable liquid treatment cartridge (9;33) to the cartridge head (10) so as to establish essentially liquid-tight connections between the at least one inlet port (13,15;36,37) and respective outlet ports (12,14) of the cartridge head (10) and between the at least one outlet port (17;38) and respective inlet ports (16) of the cartridge head (10) upon connection of the replaceable liquid treatment cartridge (9;33) to the cartridge head (10).

12. Apparatus for producing a beverage by extraction, for example coffee, including an apparatus for conditioning an aqueous liquid, e.g. drinking water, including at least one of a device according to any one of claims 1-10 and an apparatus assembled from a kit of parts according to claim 11.

13. Method of conditioning an aqueous liquid, e.g. drinking water, including:
creating at least three sub-flows of liquid from a flow of liquid to be treated by distributing the flow of liquid over at least first, second and third liquid treatment sections (3,4,5;23,24,25),
wherein the first, second and third liquid treatment sections (3,4,5;23,24,25) are arranged in parallel in flow sense, and
wherein the first, second and third liquid treatment sections (3,4,5;23,24,25) each include at least one ion exchange material,
**characterised by**
obtaining a bypass flow of liquid from the flow of liquid to be treated,
conducting the bypass flow of liquid so as to bypass the first, second and third liquid treatment sections (3,4,5;23,24,25) and
uniting the bypass flow of liquid with the at least three sub-flows downstream of the first, second and third liquid treatment sections (3,4,5;23,24,25).

14. Method according to claim 13,
including the use of a device (9;33) according to any one of claims 1-10.

15. Use of a device (9;33) according to any one of claims 1-10 to condition drinking water, including using the conditioned drinking water to produce a beverage by extraction, for example coffee.
